# EUROPÄISCHE PATENTSCHRIFT

(11) **EP 0 906 893 B1**
(45) Veröffentlichungstag und Bekanntmachung des Hinweises auf die Patenterteilung: **27.02.2002**
(21) Anmeldenummer: 98117043.4
(22) Anmeldetag: 09.09.1998
(51) Int. Cl.: C03C 8/14, C03C 1/10, C09C 1/00

(54) **Grüne Dekorfarbe für den Hochtemperaturbrand, Verfahren zu ihrer Herstellung und Verwendung**
Green decorative colour for high temperature firing, process for its preparation and its use
Couleur verte décorative pour la cuisson à haute température, son procédé de préparation et son utilisation

(30) Priorität: 02.10.1997 DE 19743642
(43) Veröffentlichungstag der Anmeldung: 07.04.1999
(73) Patentinhaber: dmc2 Degussa Metals Catalysts Cerdec AG, 60287 Frankfurt am Main (DE)
(72) Erfinder: Sperlich, Jörg, Dr., 63073 Offenbach (DE); Jackow, Katia, 63505 Langenselbold (DE); Ludwig, Stephan, 63543 Neuberg (DE); Speer, Dietrich, Dr., 63505 Langenselbold (DE); Dorer, Kai, 63150 Heusenstamm (DE)
(74) Vertreter: Reinhardt, Markus

(56) Entgegenhaltungen:
- FR-A- 2 140 344
- US-A- 3 953 646
- DATABASE WPI Section Ch, Week 8640 Derwent Publications Ltd., London, GB; Class E31, AN 86-263902 XP002088911 & SU 1 213 051 A (URALS KIROV POLY) , 23. Februar 1986
- DATABASE WPI Section Ch, Derwent Publications Ltd., London, GB; Class G01, AN 72-41643T XP002088912 & SU 315 707 A (KHIZANISHVILI IG SHUSHANI)
- DATABASE WPI Section Ch, Week 9641 Derwent Publications Ltd., London, GB; Class E37, AN 96-408205 XP002088913 & JP 08 198629 A (DAINICHISEIKA COLOR & CHEM MFG), 6. August 1996

## Beschreibung

Die Erfindung betrifft eine Chromoxid und eine Glasfritte enthaltende grüne Dekorfarbe, welche beim Hochtemperaturbrand bei mindestens 1000 °C zu einem grünen Dekor mit einem Bunttonwinkel h von 160° ± 20° führt.

Keramische Dekorfarben stellen Mischungen von Farbkörpern mit Glasflüssen dar, die auf dekorbrandfähige Träger zu Dekorzwecken aufgetragen und dann bei einer auf den Träger und die Dekorfarbe abgestimmten Brenntemperatur eingebrannt werden. Die Dekorfarbe besteht im allgemeinen aus einem oder mehreren Pigmenten als Farbkörper und einer oder mehreren Glasfritten als Glasfluß. Zur Herstellung der Dekorfarbe werden deren Bestandteile in der Regel fein miteinander vermahlen.

Üblicherweise handelt es sich bei grünen Dekorfarben um solche, welche als Pigment Chromoxid (Cr₂O₃) oder einen Spinell der Formel Co(Cr₁₋ₓAlₓ)₂O₄ mit O < x ≤ 1 enthalten. Bisher war es nicht möglich, für den Hochtemperaturbrand, also einem Brand oberhalb 1000 °C, insbesondere 1100 bis 1250 °C, Farben zur Verfügung zu stellen, welche bei den genannten Brenntemperaturen zu einem reinen Grün, also einem Grün mit einem Bunttonwinkel am oder nahe am theoretischen Wert von 160° führen. So sind die Farbtöne handelsüblicher, auf Chromoxid basierender Farben gelbgrün und jene auf dem genannten Spinell basierender Farben blaugrün oder russischgrün - beispielhaft wird auf die Farben Nr. 111456, 111457 und 111458 der Cerdec AG verwiesen. Zwar sind durch Kombination von Zirkon-Vanadium-Blau und Zirkon-Praseodym-Gelb grüne Farbtöne in der Nähe des gewünschten theoretischen Werts zugänglich, eine solche Pigmentkombination führt aber selbst bei einer Pigmentkonzentration von 50 Gew.-% nur zu äußerst blassen (hoher L*-Wert und niedriger Chroma-Wert C* gemäß DIN 5033, Teil 3) und daher kaum marktfähigen keramischen Farben. Im Grünbereich mit einem Bunttonwinkel zwischen etwa 135° und etwa 185° sind keine keramischen Farben mit hoher Farbintensität für den Hochtemperaturbrand verfügbar.

Aufgabe der Erfindung ist demgemäß, eine intensive grüne Dekorfarbe zur Verfügung zu stellen, welche beim Brand oberhalb 1000 °C, wie er beispielsweise bei der Inglasur-Dekoration auf Porzellan Anwendung findet, zu einem Bunttonwinkel um 160° führt. Ein Grün mit einem Bunttonwinkel von etwa h = 160° ist weder bläulich noch gelblich. Einen Bunttonwinkel von 160,2° weist die international als Bezugsfarbe anerkannte organische Farbe G 100 auf (Natural Color System, NCS, Förginstitut Stockholm). Zur Definition des Bunttonwinkels wird auf die DIN 5033, Teil 3 hingewiesen.

Gefunden wurde eine grüne Dekorfarbe mit einem Bunttonwinkel h (DIN 5033, Teil 3) von 160° ± 20° nach einem Dekorbrand bei mindestens 1000 °C, welche dadurch gekennzeichnet ist, daß sie Chromoxid und eine oder mehrere Glasfritten und zusätzlich eine Kobaltverbindung aus der Reihe Kobaltoxid, Kobalthydroxid und unterhalb oder bei der Brenntemperatur Kobaltoxid bildende Kobaltverbindungen enthält, wobei das Atomverhältnis Kobalt zu Chrom 0,01 bis 0,35 beträgt.

Das erfindungsgemäße Atomverhältnis Co zu Cr ist für den Bunttonwinkel maßgeblich. Außer dem Co/Cr-Atomverhältnis beeinflussen aber auch die Brenntemperatur und die Zusammensetzung des Glasflusses in gewissem Umfang den Bunttonwinkel h. Ein bevorzugter Bereich für das Co/Cr-Atomverhältnis ist 0,10 bis 0,25. Mit zunehmendem Co/Cr-Atomverhältnis nimmt der Bunttonwinkel zu - siehe Beispiele 6 und 7. Bei einer PMK von 5 bis 10 % liegt das Co/Cr-Atomverhältnis vorzugsweise im Bereich von etwa 0,2 bis 0,25 , bei einer PMK von 10 bis 20 % im Bereich von etwa 0,1 bis 0,2. Bevorzugte erfindungsgemäße grüne Dekorfarben führen zu einem Bunttonwinkel h von 160° ± 10°, insbesondere etwa 160°.

Bei einer Einbrenntemperatur unterhalb 1000 °C, etwa einer für Aufglasurdekore üblichen Brenntemperatur von 820 °C bildet sich keine neue kristalline Phase, und es wird auch nicht der oberhalb 1000 °C erhältliche rein-grüne Farbton erhalten (siehe Beispiel 1 und Vergleichsbeispiel 1).

Die erfindungsgemäße Dekorfarbe kann eine beliebige Co-Verbindung enthalten mit der Maßgabe, daß unterhalb oder bei der Brenntemperatur von mindestens 1000 °C Kobaltoxid entstehen und mit dem Chromoxid reagieren kann. Es wurde durch Phasenanalysen festgestellt, daß während des Brands eine Spinellphase gebildet wird. Es wird angenommen, daß durch die Kombination des gelbtönigen Cr₂O₃ mit dem gebildeten blauen Co-Spinell der reine Grünton resultiert.

Die Zugänglichkeit grüner Dekorfarben auf Cr₂O₃-Basis mit einem Bunttonwinkel von oder nahe bei 160° durch die Anwesenheit einer begrenzten Menge einer anspruchsgemäßen Kobaltverbindung war überraschend, weil eine keramische Farbe auf der Basis eines Gemischs von Chromoxid und einem blauen Kobaltspinell beim Brand oberhalb 1000 °C nur zu einem schmutzigen dunklen Grün führt. Co-Spinelle bilden unterhalb oder bei der Brenntemperatur im wesentlichen kein freies Kobaltoxid; Kobaltspinelle werden daher nicht bei der Herstellung erfindungsgemäßer grüner Dekorfarben eingesetzt.

Desweiteren wurde festgestellt, daß die erforderliche Verschiebung des Farbtons von gelbgrün nach rein-grün (h etwa 160°) nicht dadurch bewirkt werden kann, daß die entsprechende Menge Kobaltoxid bereits in dem Glasfluß gelöst eingesetzt wird. Offensichtlich müssen beim Brand das Chromoxid und die Kobaltverbindung in so engem Kontakt sein und lokal in ausreichend hoher Co-Konzentration vorliegen, daß die für die Farbverschiebung als verantwortlich angesehene Spinellbildung erfolgen kann.

Anstelle Kobalt(II)hydroxid oder Kobalt(II)oxid können auch andere zweiwertige Kobaltverbindungen, wie COCO₃, Co-silikate, Co-borate, Co(NO₃)₂, Co-acetat und Co-oxalat, nicht aber Kobaltspinelle in der erfinderischen Dekorfarbe enthalten sein.

Bei dem Glasfluß handelt es sich um übliche Zusammensetzungen, welche bleifrei oder bleihaltig sein können. Üblicherweise liegt der Glasfluß in Form einer oder mehrerer Glasfritten vor.

Das Pigment Chromoxid ist im Handel erhältlich.

Die Pigmentmassenkonzentration (PMK = Gew.-% Cr₂O₃ plus Co-Verbindung in der keramischen Farbe) in den erfindungsgemäßen keramischen Farben liegt im allgemeinen im Bereich von 5 bis 60 %, vorzugsweise 5 bis 30 % und besonders bevorzugt 10 bis 30 %. Auch die Kornverteilung liegt im üblichen Rahmen, nämlich meist bei D₅₀ = 3-5 µm und D₉₀ um 10 µm.

Die Herstellung der erfindungsgemäßen grünen keramischen Dekorfarben erfolgt in an sich bekannter Weise. Wesentlich ist, daß zusätzlich zu Chromoxid und einer oder mehreren Glasfritten eine Kobaltverbindung in einer Menge entsprechend einem Co/Cr-Atomverhältnis im Bereich von 0,01 bis 0,35 eingesetzt und das Stoffgemisch intensiv miteinander in Kontakt gebracht wird. Bei den Kobaltverbindungen handelt es sich um CoO, Co(OH)₂ oder eine bei der Brenntemperatur oberhalb 1000 °C Kobaltoxid bildende Verbindung, wie CoCO₃, Co-silikate, insbesondere Co-silikat, Co(NO₃)₂, Co-acetat und Co-oxalat. Bei der intensiven Inkontaktbringung können zusätzlich Hilfsstoffe, wie Rieselhilfsmittel sowie Mahlhilfsmittel anwesend sein.

Die Menge der Hilfsstoffe liegt im allgemeinen bei 0 bis 5 Gew.-%, bezogen auf die Dekorfarbe, vorzugsweise 0 bis 2 Gew.-%. Besonders bevorzugte Dekorfarben sind im wesentlichen frei von derartigen Hilfsstoffen. Die Inkontaktbringung erfolgt im allgemeinen in einer Intensivmühle, wie Kugelmühle, Stichmühle oder Rührwerksmühle. Das Mahlen auf Dekorfeinheit, vorzugsweise D₉₀ um 10 µm, D₅₀ 3-5 µm und D₁₀ 1-2 µm, kann in An- oder Abwesenheit eines flüssigen Mahlmediums erfolgen; meistens wird in Gegenwart von Wasser oder einem niederen Alkohol oder einem Gemisch davon gemahlen. Die Dekorfarbe kann, soweit erforderlich, nach dem Trocknen in bekannter Weise angepastet und gedruckt werden.

Die erfindungsgemäße Dekorfarbe kann bezüglich des Bunttonwinkels durch Variation des Co-Gehalts leicht im Bereich von 160° ± 20° eingestellt werden. Der erfindungsgemäß leicht erhältliche normgerechte Bunttonwinkel von 160° ermöglicht es auch, im Mehrfarbendruck zu Bildern mit verbesserter Reproduktionsqualität zu gelangen. Die Dekorfarbe läßt sich zum direkten Druck zur Herstellung von keramischen Dekoren, welche bei mindestens 1000 °C, vorzugsweise 1100 bis 1250 °C eingebrannt werden, verwenden. Die Dekore lassen sich durch direkten oder indirekten Druck auf Porzellan oder andere keramische Werkstoffe auftragen.

### Beispiele

Generell wurden alle Dekorfarben nach folgendem Ablauf hergestellt:
1. Aufmahlen:
   Bloch-Rosetti-Mühle; 120 g kleine Mahlkugeln; etwa 40 % Wasser oder Alkohol als Mahlmedium; Aufmahlen auf eine Korngrößenverteilung von ca. D₅₀ = 3-3,5 µm und D₉₀ = 9,5-11 µm.
2. Anpastung:
   Siebdruck-Medium 80820 der Firma Cerdec AG; Anpastverhältnis (Druckfarbe zu Medium) 10:6. Es wurde in einer Engelsmann-Maschine dispergiert.
3. Druck:
   Gedruckt wurde mit einer Fleischle GZ 30 S-Siebdruckmaschine und Sieb 100T; überfilmt wurde mit der Filmlösung 80450 der Firma Cerdec AG. Das Abziehbild wurde auf glasiertes Porzellan übertragen. Gebrannt wurde in einem Gastunnelofen 90 Minuten bei 1140 °C, alternativ bei 1220 °C.

### Beispiel 1

Ein Gemisch aus 15,43 Gew.-% Chromoxid GN (Bayer AG), 3,43 Gew.-% Kobalthydroxid und 81,14 Gew.-% einer bleifreien Glasfritte (Nr. 901347 der Cerdec AG) wurde in Gegenwart von Ethanol aufgemahlen. Nach dem Druck und Brand bei 1140 °C und 820 °C (nicht erfindungsgemäß) wurden folgende Farbwerte nach CIE-Lab (DIN 5033, Teil 3) erhalten.

| Brenntemperatur | h | L* | a* | b* | C* |
|---|---|---|---|---|---|
| 1140 °C | 160,9 | 44,2 | -31,2 | 10,8 | 33,0 |
| 820 °C | 129,6 | 25,4 | -10,9 | 13,2 | 17,2 |

Während bei 1140 °C Brenntemperatur, bei der ein Bunttonwinkel h von etwa 160° erreicht wird, ist ein solcher Winkel bei einem Brand bei 820 °C nicht erhältlich.

### Beispiel 2

Hergestellt wurde eine grüne Dekorfarbe aus einem Glasfluß (Nr. 90368 der Cerdec AG), Cr₂O₃ und CoSiO₃. Das Co/Cr-Atomverhältnis betrug 0,03, die Pigmentmassenkonzentration [100 (Cr₂O₃ + CoSiO₃) / (Fluß + Cr₂O₃ + CoSiO₃)] 14 %. Die Farbwerte nach dem Brand bei 1220 °C betrugen: L* = 51,4 , a* = -17,4 , b* = 13,9 , C* = 22,3 und h = 141,2. Das Beispiel zeigt, daß bereits ein sehr niedriger Co-Gehalt zu einer Steigerung des h-Werts führt.

### Beispiele 3 bis 5

Der Tabelle sind die Zusammensetzungen und CIE-Lab-Werte einschließlich des h-Werts zu entnehmen:

| Beispiel Nr. | | 3 | 4 | 5 |
|---|---|---|---|---|
| Cr₂O₃ (Gew.-%) | | 10,92 | 7,20 | 10,09 |
| Co(OH)₂ (Gew.-%) | | 2,75 | 2,46 | 2,48 |
| Glasfritte (Gew.-%) | | | | |
| Nr. 901347 | | 86,33 | - | - |
| Nr. 90016 | | - | 90,36 | 87,43 |
| Brand bei 1140 °C | C* | 30,6 | 31,8 | |
| | h | 168,8 | 170,7 | |
| | L* | 48,0 | 48,4 | |
| | a* | -30,0 | -31,2 | |
| | b* | 5,9 | 5,1 | |
| Brand bei 1220 °C | C* | 29,1 | 29,2 | 32,2 |
| | h | 172,2 | 172,7 | 154,8 |
| | L* | 48,5 | 48,4 | 44,8 |
| | a* | -28,8 | -29,0 | -29,1 |
| | b* | 4,0 | 3,7 | 13,7 |

### Beispiele 6 und 7

Untersucht wurde der Einfluß des Co/Cr-Atomverhältnisses bei einer Pigmentmassenkonzentration (PMK) in der Dekorfarbe von 10 % beziehungsweise 19 %. Als Fluß diente eine bleifreie Glasfritte (Nr. 90016 der Cerdec AG). Cr wurde als Cr₂O₃ und Co als Co(OH)₂ eingesetzt. Die Farbwerte folgen aus der Tabelle:

| Co/Cr-Verhältnis | PMK (%) | C* | h* | L* | a* | b* |
|---|---|---|---|---|---|---|
| 0 | 10 | 35,5 | 135,6 | 39,8 | -25,4 | 24,9 |
| 0,10 | 10 | 35,2 | 139,2 | 48,5 | -26,6 | 23,0 |
| 0,15 | 10 | 33,0 | 149,5 | 47,8 | -28,4 | 16,7 |
| 0,17 | 10 | 32,5 | 153,6 | 47,0 | -29,1 | 14,4 |
| 0,19 | 10 | 31,0 | 158,7 | 47,7 | -28,8 | 11,2 |
| 0,21 | 10 | 30,3 | 162,5 | 47,1 | -28,9 | 9,1 |
| 0,30 | 10 | 28,8 | 176,6 | 46,4 | -28,7 | 1,7 |
| 0,1 | 19 | 31,8 | 150,1 | 38,4 | -27,5 | 15,9 |
| 0,15 | 19 | 32,1 | 157,7 | 37,5 | -29,7 | 12,2 |
| 0,17 | 19 | 31,1 | 162,1 | 36,6 | -29,6 | 9,5 |
| 0,19 | 19 | 29,8 | 166,2 | 36,0 | -28,9 | 7,1 |
| 0,21 | 19 | 30,4 | 168,9 | 35,8 | -29,8 | 5,9 |
| 0,30 | 19 | 29,7 | 179,9 | 35,2 | -29,7 | 0,0 |

Die Meßergebnisse zeigen, daß mit zunehmendem Co/Cr-Atomverhältnis der h-Wert ansteigt. Desweiteren folgt aus der Tabelle, daß bei gleichem Co/Cr-Verhältnis der h-Wert mit zunehmendem PMK zunimmt.

### Beispiel 7

Analog Beispiel 6 wurden Dekorfarben unter Einsatz einer anderen bleifreien Glasfritte (Nr. 90134 der Cerdec AG) hergestellt und nach dem Brand bei 1220 °C vermessen. Die Farbwerte folgen aus der Tabelle:

| Co/Cr-Verhältnis | PMK (%) | C* | h* | L* | a* | b* |
|---|---|---|---|---|---|---|
| 0,1 | 10 | 36,2 | 140,0 | 46,7 | -27,7 | 23,3 |
| 0,15 | 10 | 33,7 | 148,7 | 47,0 | -28,8 | 17,5 |
| 0,21 | 10 | 31,8 | 159,1 | 46,8 | -29,7 | 11,4 |
| 0,3 | 10 | 28,9 | 176,4 | 46,9 | -28,9 | 1,8 |
| 0,1 | 19 | 34,7 | 147,1 | 38,6 | -29,1 | 18,9 |
| 0,15 | 19 | 33,0 | 156,3 | 37,6 | -30,2 | 13,3 |
| 0,17 | 19 | 33,0 | 159,1 | 37,7 | -30,8 | 11,8 |
| 0,3 | 19 | 30,6 | 179,9 | 35,9 | -30,6 | 0,1 |

Die Versuche zeigen bezüglich des Einflusses des Co/Cr-Atomverhältnisses und der PMK den analogen Verlauf wie in Beispiel 6. Der Einfluß der Art der Glasfritte - Vergleiche Beispiel 6 mit Beispiel 7 - ist dagegen geringer.

### Vergleichsbeispiele

Handelsübliche grüne Dekorfarben auf der Basis einer bleifreien Glasfritte und eines Pigments aus der Reihe Chromoxid (A), eines im wesentlichen aus einem Kobalt-Chrom-Spinell mit geringem Al-Gehalt bestehenden Pigments (B) beziehungsweise eines Gemischs aus einem Co(Cr,Al)₂O₄-Spinell und einem aluminiumhaltigen Korund (C) ergaben nach Applikation auf glasiertem Porzellan und Brand bei 1220 °C folgende Farbwerte:

| Pigment | A 1 | B 2 | C 3 |
|---|---|---|---|
| Gew.-% Pigment | 18 | 20 | 28 |
| Gew.-% Fritte | 82 | 80 | 72 |
| L* | 41,2 | 38,1 | 32,1 |
| a* | -25,7 | -27,5 | -32,3 |
| b* | 27,2 | -11,2 | -3,0 |
| C* | 37,4 | 29,7 | 32,4 |
| h | 133,4 | 202,2 | 185,4 |

Ein Bunttonwinkel h im Bereich von etwa 133° bis 185° wird durch vorbekannte Dekorfarben für den Hochtemperaturbrand nicht abgedeckt.

## Patentansprüche

1. Grüne Dekorfarbe mit einem Bunttonwinkel h (DIN 5033, Teil 3) von 160° ± 20° nach einem Dekorbrand bei mindestens 1000 °C,
**dadurch gekennzeichnet,**
**daß** sie Chromoxid und eine oder mehrere Glasfritten und zusätzlich eine Kobaltverbindung aus der Reihe Kobaltoxid, Kobalthydroxid und unterhalb oder bei der Brenntemperatur Kobaltoxid bildende Kobaltverbindungen enthält, wobei das Atomverhältnis Kobalt zu Chrom 0,01 bis 0,35 beträgt.

2. Grüne Dekorfarbe nach Anspruch 1,
**dadurch gekennzeichnet,**
**daß** das Atomverhältnis Co zu Cr 0,1 bis 0,25 beträgt.

3. Grüne Dekorfarbe nach Anspruch 1,
**dadurch gekennzeichnet,**
**daß** das Atomverhältnis Co zu Cr bei einer Pigmentmassenkonzentration von 10 bis 20 % 0,10 bis 0,2 und bei einer Pigmentmassenkonzentration von 5 bis 10 % 0,2 bis 0,25 beträgt.

4. Grüne Dekorfarbe nach einem der Ansprüche 1 bis 3,
**dadurch gekennzeichnet,**
**daß** sie als Kobaltverbindung Kobalthydroxid enthält.

5. Verfahren zur Herstellung einer grünen Dekorfarbe mit einem Bunttonwinkel h von 160° ± 20° nach einem Dekorbrand bei mindestens 1000 °C,
**dadurch gekennzeichnet,**
**daß** man Chromoxid, eine oder mehrere Glasfritten und eine Kobaltverbindung aus der Reihe Kobaltoxid, Kobalthydroxid und unterhalb oder bei der Brenntemperatur Kobaltoxid bildende Kobaltverbindungen, wobei das Atomverhältnis Kobalt zu Chrom im Bereich von 0,01 bis 0,35 liegt, in An- oder Abwesenheit üblicher Hilfsmittel intensiv miteinander in Kontakt bringt.

6. Verfahren nach Anspruch 5,
**dadurch gekennzeichnet,**
**daß** man Chromoxid, die Kobaltverbindung und die Glasfritte(n) in einer Intensivmühle gemeinsam in Gegenwart von Wasser oder einem niederen Alkohol aufmahlt und anschließend trocknet.

7. Verfahren nach Anspruch 5 oder 6,
**dadurch gekennzeichnet,**
**daß** man Chromoxid und die Kobaltverbindung, vorzugsweise CoO, Co(OH)₂, CoCO₃ oder ein Co-silikat in einer Menge entsprechend einem Co/Cr-Atomverhältnis von 0,10 bis 0,25 einsetzt.

8. Verwendung einer grünen Dekorfarbe gemäß einem der Ansprüche 1 bis 4 zur Herstellung eines bei mindestens 1000 °C gebrannten keramischen Dekors, insbesondere Inglasur-Dekors, mit einem Bunttonwinkel h von 160° ± 20°.

## Claims

1. A green decorative colour with a hue angle h (DIN 5033, Part 3) of 160° ± 20° after a decoration firing. at a temperature of at least 1,000 °C,
**characterised in that**
it contains chromium oxide and one or more glass frits and, in addition, a cobalt compound selected from the series comprising cobalt oxide, cobalt hydroxide and cobalt compounds forming cobalt oxide below or at the firing-temperature, whereby the atomic ratio of cobalt to chromium amounts to 0.01 to 0.35.

2. Green decorative-colour according to claim 1,
**characterised in that**
the atomic ratio of Co to Cr amounts to 0.1 to 0.25.

3. Green decorative colour according to claim 1,
**characterised in that**
the atomic ratio of Co to Cr amounts to 0.10 to 0.2 at a pigment mass concentration from 10 to 20 % and 0.2 to 0.25 at a pigment mass concentration from 5 to 10 %.

4. Green decorative colour according to one of claims 1 to 3,
**characterised in that**
it contains cobalt hydroxide by way of cobalt compound.

5. A process for producing a green decorative colour with a hue angle h of 160° ± 20° after a decoration firing at a temperature of at least 1,000 °C,
**characterised in that**
chromium oxide, one or more glass frits and a cobalt compound selected from the series comprising cobalt oxide, cobalt hydroxide and cobalt compounds forming cobalt oxide below or at the firing-temperature, whereby the atomic ratio of cobalt to chromium lies within the range from 0.01 to 0.35, are brought into intensive contact with one another in the presence or absence of conventional auxiliaries.

6. Process according to claim 5,
**characterised in that**
chromium oxide, the cobalt compound and the glass frit(s) are ground down jointly in an intensive mill in the presence of water or a lower alcohol and are subsequently dried.

7. Process according to claim 5 or 6,
**characterised in that**
chromium oxide and the cobalt compound, preferably CoO, Co(OH)₂, CoCO₃ or a Co silicate, are employed in a quantity corresponding to a Co/Cr atomic ratio of 0.10 to 0.25.

8. Use of a green decorative colour according to one of claims 1 to 4 for producing a ceramic decoration, in particular an in-glaze decoration, with a hue angle h of 160° ± 20° that is fired at a temperature of at least 1,000 °C.

## Revendications

1. Colorant de décoration vert ayant un angle de nuance de couleur h (norme DIN 5033, troisième partie) de 160° ± 20° après cuisson du décor à au moins 1000°C,
**caractérisé en ce qu'**
il contient de l'oxyde de chrome et un ou plusieurs verres frittés, et en outre un composé de cobalt de la série oxyde de cobalt, hydroxyde de cobalt et composés de cobalt formant de l'oxyde de cobalt à une température inférieure ou égale à la température de cuisson, le rapport atomique du cobalt au chrome allant de 0,01 à 0,35.

2. Colorant de décoration vert selon la revendication 1,
**caractérisé en ce que**
le rapport atomique de Co à Cr va de 0,1 à 0,25.

3. Colorant de décoration vert selon la revendication 1,
**caractérisé en ce que**
le rapport atomique de Co à Cr à une concentration massique de pigment de 10 à 20 % s'élève de 0,10 à 0,2, et à une concentration massique de pigment de 5 à 10 %, s'élève à 0,2 à 0,25.

4. Colorant de décoration vert selon l'une des revendications 1 à 3,
**caractérisé en ce qu'**
il contient comme composé de cobalt l'hydroxyde de cobalt.

5. Procédé de production d'un colorant de décoration vert avec un angle de nuance de couleur h de 160° ± 20° après une cuisson du décor à au moins 1000°C,
**caractérisé en ce qu'**
on met en contact les uns avec les autres de manière intensive, en la présence ou en l'absence d'adjuvants habituels, de l'oxyde de chrome, un ou plusieurs verres frittés et un composé de cobalt de la série oxyde de cobalt, hydroxyde de cobalt et composés de cobalt formant de l'oxyde de cobalt à une température inférieure ou égale à la température de cuisson, le rapport atomique du cobalt au chrome se situant dans un intervalle de 0,01 à 0,35.

6. Procédé selon la revendication 5,
**caractérisé en ce qu'**
on broie puis on sèche ensemble l'oxyde de chrome, le composé de cobalt et le ou les verres frittés dans un broyeur intensif en présence d'eau ou d'un alcool inférieur.

7. Procédé selon la revendication 5 ou 6,
**caractérisé en ce qu'**
on utilise l'oxyde de chrome et le composé de cobalt, de préférence CoO, Co(OH)₂, CoCO₃ ou un silicate de cobalt en une quantité correspondant à un rapport atomique Co/Cr de 0,10 à 0,25.

8. Utilisation d'un colorant de décoration en verre selon l'une des revendications 1 à 4 pour la production d'un décor céramique que l'on fait cuire à au moins 1000°C, en particulier d'un décor de glaçure, avec un angle de nuance de couleur h de 160° ± 20°.
